# EUROPEAN PATENT APPLICATION

(11) **EP 4 064 744 A1**
(43) Date of publication of application: **28.09.2022**
(21) Application number: 19953110.4
(22) Date of filing: 18.11.2019
(51) Int. Cl.: H04W 8/22, H04W 52/18

(54) **TERMINAL AND WIRELESS COMMUNICATION METHOD**

(71) Applicant: NTT DOCOMO, INC., Chiyoda-Ku Tokyo 100-6150 (JP)
(72) Inventor: OKAMURA, Masaya, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2019/045153
(87) International publication number: WO 2021/100100

(57) **Abstract**

A terminal according to one aspect of the present disclosure has a transmitting section that transmits capability information indicating more than one values for a maximum uplink duty cycle; and a control section that controls the maximum uplink duty cycle to use when transmitting a signal or information different from the capability information. According to one aspect of the present disclosure, it is possible to appropriately notify a maximum uplink duty cycle.

## Description

### Technical Field

The present disclosure relates to a terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For NR, countermeasures for the Maximum Permitted Exposure (MPE) problem have been considered. For example, in Rel. 15 NR, UE capability information that notifies the uplink transmission rate at which a user terminal (User Equipment (UE)) can transmit without needing additional power back-off (Power-management Maximum Power Reduction(P-MPR)) has been introduced in order to satisfy millimeter wave human body protection guidelines. This capability information may be referred to as the maximum uplink duty cycle in the Frequency Range 2 (FR2) (*maxUplinkDutyCycle-FR2*)*.*

In contrast, temporally and dynamically changing the above-mentioned duty cycle is considered. For example, making the value be small when the UE is close to a human body and making the value be large when transmit power is low can be considered. However, consideration on how specifically to notify a change of the duty cycle is not progressing. If this is not clearly stipulated, this may cause that UL scheduling is not able to be appropriately controlled, and communication throughput deteriorates.

Accordingly, one objective of the present disclosure is to provide a terminal and a radio communication method that can appropriately notify a maximum uplink duty cycle.

### Solution to Problem

A terminal according to one aspect of the present disclosure has a transmitting section that transmits capability information indicating more than one values for a maximum uplink duty cycle; and a control section that controls the maximum uplink duty cycle to use when transmitting a signal or information different from the capability information.

### Advantageous Effects of Invention

According to one aspect of the present disclosure, it is possible to appropriately notify a maximum uplink duty cycle.

### Brief Description of Drawings

FIGS. 1A and 1B are diagrams to illustrate examples of a CSI report that includes a DI;
FIGS. 2A and 2B are diagrams to illustrate examples of correspondence between DI field values and maximum UL duty cycles;
FIGS. 3A and 3B are diagrams to illustrate examples of correspondence between alert signal values and maximum UL duty cycles;
FIG. 4 is a diagram to illustrate an example of a schematic structure of a radio communication system according to one embodiment;
FIG. 5 is a diagram to illustrate an example of a structure of a base station according to one embodiment;
FIG. 6 is a diagram to illustrate an example of a structure of a user terminal according to one embodiment; and
FIG. 7 is a diagram to illustrate an example of a hardware structure of the base station and the user terminal according to one embodiment.

### Description of Embodiments

### (Maximum Uplink Duty Cycle)

For NR, countermeasures for the problem of Maximum Permitted Exposure (MPE) (or electromagnetic power density exposure) have been considered. For example, in Rel. 15 NR, UE capability information that notifies the uplink transmission rate at which a UE can transmit without needing the application of additional power back-off (power-management maximum power reduction (Power-management MPR (P-MPR))) has been introduced in order to satisfy millimeter wave human body protection guidelines. This capability information may be referred to as the maximum uplink duty cycle in the Frequency Range 2 (FR2) (*maxUplinkDutyCycle-FR2*)*.*

*maxUplinkDutyCycle-FR2* corresponds to a higher layer parameter. *maxUplinkDutyCycle-FR2* may be an upper limit for the UL transmit ratio within a given evaluation period (for example, 1 second). In Rel. 15 NR, this value may be any of n15, n20, n25, n30, n40, n50, n60, n70, n80, n90, and n100, which respectively correspond to 15%, 20%, 25%, 30%, 40%, 50%, 60%, 70%, 80%, 90%, and 100%. *maxUplinkDutyCycle-FR2* may be applied to all UE power classes in FR2.

When a ratio of UL symbols scheduled within a given evaluation period (for example, one second) exceeds maxUplinkDutyCycle-FR2, the UE that reported maxUplinkDutyCycle-FR2 may follow the already scheduled UL (in other words, follow the scheduling indication without stopping the UL transmission), and may apply P-MPR to reduce transmit power. When the ratio does not exceed maxUplinkDutyCycle-FR2, the UE does not need to apply P-MPR.

When the UE applies P-MPR, for example, the UE maximum output power for a carrier f of a serving cell c may be configured so that measured peak effective isotropic radiated power (EIRP) is included within a given range based on a power value that is restricted in accordance with P-MPR.

Note that a default value may not be stipulated for maxUplinkDutyCycle-FR2. A UE that does not report maxUplinkDutyCycle-FR2 may scale power density or perform countermeasures for the MPE problem by other means.

in Rel. 15 NR, a UE can report the above-mentioned duty cycle with only one temporally static value.

In contrast, temporally and dynamically changing the above-mentioned duty cycle is considered. For example, making the value be small when the UE is close to a human body and making the value be large when transmit power is low can be considered. However, consideration on how specifically to notify a change of the duty cycle is not progressing. If this is not clearly stipulated, this may cause that UL scheduling is not able to be appropriately controlled, and communication throughput deteriorates.

Accordingly, the inventors of the present invention came up with the idea of a method for appropriately notifying the maximum uplink duty cycle.

With reference to the drawings, detailed description is given below regarding embodiments according to the present disclosure. The radio communication methods according to respective embodiments may each be employed individually, or may be employed in combination.

In the present disclosure, description is given assuming that "duty cycle" or "maximum uplink duty cycle" means the maximum uplink duty cycle in FR2 *(maxUplinkDutyCycle-FR2),* but there is no limitation to this. "Duty cycle" may be interpreted as a duty cycle in another FR (for example, FR4).

The following embodiments correspond to a case in which a capability for one or a plurality of maximum uplink duties for a FR are reported.

### (Radio Communication Method)

### <First Embodiment>

In a first embodiment, a UE reports to the network a value for one maximum uplink (UL) duty cycle as UE capability information, similarly to Rel. 15 NR. The UE uses other information that is not the UE capability information or uses another signal to transmit to a network a value for the maximum uplink duty cycle that differs from the reported value for the maximum uplink duty cycle.

The above-mentioned another signal may be at least one of the following:
(1-1) uplink control information (UCI),
(1-2) uplink reference signal (RS),
(1-3) signal transmitted by using a channel such as a PUCCH, a PUSCH, and a PRACH, and
(1-4) higher layer signaling.

The UCI in the above-mentioned (1-1) may correspond to at least one of transmission confirmation information (for example, Hybrid Automatic Repeat reQuest ACKnowledgement (HARQ-ACK)), a scheduling request (SR), channel state information (CSI), or the like, or may correspond to an indicator that pertains to the duty cycle. The indicator pertaining to the duty cycle is referred to below as a duty cycle indicator (DI).

The RS in the above-mentioned (1-2) may be at least one of a demodulation reference signal (DMRS), a phase tracking reference signal (PTRS), a sounding reference signal (SRS), or the like. The UE may, on the basis of the maximum UL duty cycle to report, determine the sequence, resources (for example, period, subcarrier, symbol, and so on), scramble ID, the presence or absence of hopping, and so on for the corresponding RS.

In relation to the above-mentioned (1-3), the UE may, on the basis of the maximum UL duty cycle to report, determine the sequence, resources (for example, period, subcarrier, symbol, and so on), scramble ID, the presence or absence of hopping, and so on for the corresponding channel.

In relation to the above-mentioned (1-4), the UE may include information on the maximum UL duty cycle in higher layer signaling and transmit the higher layer signaling.

Note that, in the present disclosure, higher layer signaling may be, for example, one or a combination of Radio Resource Control (RRC) signaling, Medium Access Control (MAC) signaling, broadcast information, and the like.

MAC signaling may use, for example, a MAC control element (MAC CE), a MAC Protocol Data Unit (PDU), or the like. Broadcast information may be, for example, a master information block (MIB), a system information block (SIB), minimum system information (Remaining Minimum System Information (RMSI)), other system information (OSI), or the like.

Note that, even when not reporting capability information for the maximum UL duty cycle, the UE may use at least one signal of the above-mentioned (1-1) through (1-4) to transmit to the network information pertaining to the maximum UL duty cycle.

The UE may determine an appropriate maximum UL duty cycle on the basis of distance between the corresponding antenna of the UE to any human body. When the determined maximum UL duty cycle is smaller than the reported maximum UL duty cycle, for example, at least one signal of the above-mentioned (1-1) through (1-4) may be used to transmit information pertaining to the determined maximum UL duty cycle to the network.

When the transmit power is less than a given threshold, the UE may determine a maximum UL duty cycle that is larger than the current maximum UL duty cycle, and transmit information pertaining to the determined maximum UL duty cycle to the network.

### [CSI Report FOR Maximum Uplink Duty Cycle]

The DI may be jointly coded with (altogether one field may be used to report the DI with) at least one CSI such as a channel quality indicator (CQI), a precoding matrix indicator (PMI), a CSI-RS resource indicator (CRI), an SS/PBCH block resource indicator (SS/PBCH Block Indicator (SSBRI)), a layer indicator (LI), a rank indicator (RI), L1-RSRP (layer 1 reference signal received power), L1-RSRQ (Reference Signal Received Quality), an L1-SINR (Signal to Interference plus Noise Ratio), and an L1-SNR (Signal to Noise Ratio), or may be reported using one independent field.

The UE may report the DI by using a specific CSI field included in a CSI report used in Rel. 15 NR. In other words, the UE may generate a CSI report that includes the DI so as the correspond to a candidate for the size of a CSI report used in Rel. 15 NR, and report the CSI report.

This specific field may be a field for a beam report, or may be an L1-RSRP field, for example.

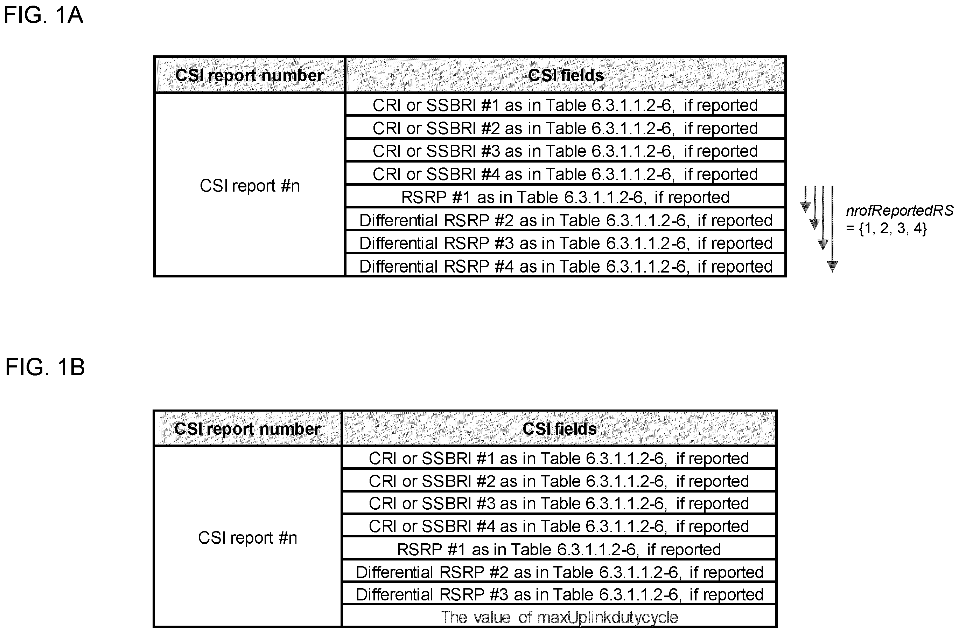

FIGS. 1A and 1B are diagrams to illustrate examples of a CSI report that includes DI. FIG. 1A illustrates an example of a Rel. 15 CSI report for describing a comparison. FIG. 1A illustrates a mapping order of CSI fields included in one CSI report (the n-th CSI report #n) for a CSI/RSRP or SSBRI/RSRP report stipulated in Table 6.3.1.1.2-8 of 3GPP TS 38.212 V15.7.0.

The CSI reports in FIG. 1A can include one or more sets of CRI/SSBRI and RSRP. The number of these sets may be configured in accordance with a higher layer parameter (for example, the RRC parameter "*nrofReportedRS*") that indicates the number of reference signal resources for the report target. When nrofReportedRS = X (X = {1, 2, 3, 4}), a set of CRI/SSBRI and RSRP that are less than or equal to the X-th index (#X) may be included in the CSI report.

Note that RSRP #1 may be a field having a given number of bits (for example, m bits) indicating L1-RSRP for a largest measurement value, and differential RSRP #2 to #4 may be a field that has fewer bits (for example, n bits) than this above-mentioned given number of bits and indicate a differential of each RSRP from the RSRP #1. In Rel. 15 NR, m=7 and n=4.

FIG. 1B is a diagram to illustrate an example of a CSI report in which the field for the differential RSRP #4 in FIG. 1A is used as a field for the DI. It may be assumed that, when nrofReportedRS = "Y" is configured, the UE uses the field for the differential RSRP #{Y+1} in the CSI report as the field for the DI.

For example, when Y = 1, 2, and 3 is configured, it may be assumed that the UE respectively uses the fields for the differential RSRP #2, #3, and #4 to report the DI. FIG. 1B corresponds to a CSI report in a case when Y = 3 is configured. The field for the differential RSRP #4 in FIG. 1A is interpreted as a DI field that indicates a value pertaining to the maximum UL duty cycle.

In Rel. 16 NR and later versions, the nrofReportedRS may be a value that is 4 or more as well, and Y may be 4 or more. The CSI report may include a set of four or more pieces of CRI/SSBRI and RSRP. The m and n described above are not respectively limited to 7 and 4.

Note that it may be assumed that the UE does not report the maximum UL duty cycle using a CSI report that includes L1-RSRP. In this case, the UE may use a CSI report that does not include L1-RSRP to report the maximum UL duty cycle. According to this structure, when consideration is given to CSI priority which is described below, it is possible to appropriately implement reporting of L1-RSRP and reporting of the maximum UL duty cycle.

The size of the DI field may be the same size as the differential RSRP field (= four bits), or may be determined on the basis of the number of candidates (11 in Rel. 15 NR) for the maximum UL duty cycle that are stipulated in advance by the specification.

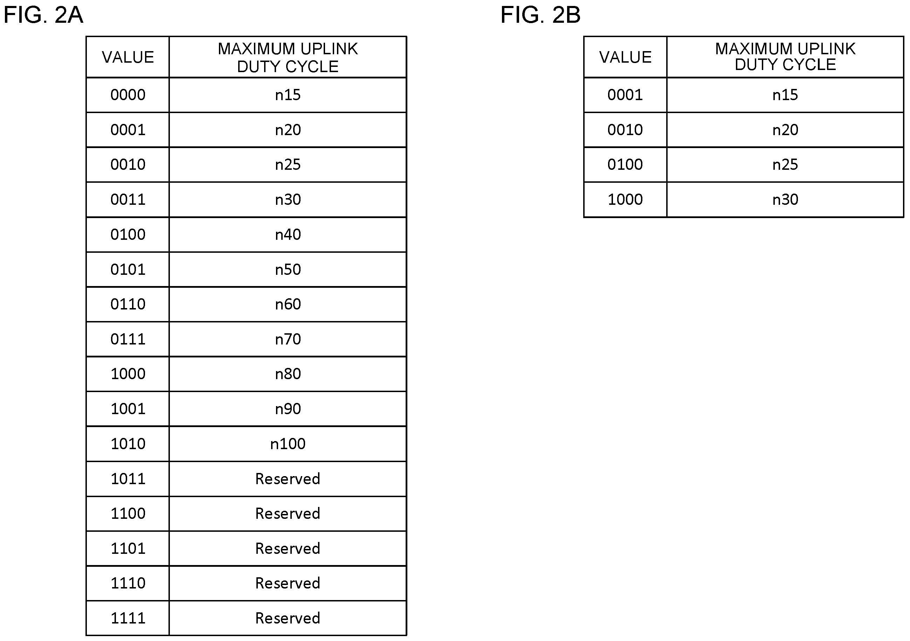

FIGS. 2A and 2B are diagrams to illustrate examples of correspondence between DI field values and maximum UL duty cycles. The correspondence here may be stipulated in advance in a specification or may be configured by higher layer signaling or the like.

FIG. 2A illustrates an example of the above-mentioned correspondence in a case where the DI field is indicated by four bits. Any of n15 through n100 included in this table may firstly be reported to the network as UE capability information. The maximum UL duty cycle notified using the UE capability may be referred to as an initial value for the maximum UL duty cycle.

In FIG. 2A, the DI field values (code points) are associated with maximum UL duty cycles in ascending order, but there is no limitation to this order, and the DI field values may be associated with maximum UL duty cycles in descending order, for example. Note that "Reserved" may mean a value to be defined in the future.

FIG. 2B illustrates an example of the above-mentioned correspondence in the case where the DI field is indicated by four bits, which is the same as in FIG. 2A. A difference from FIG. 2A is a bitmap base representation in which only one bit is "1". In the case of FIG. 2B, it is assumed that the UE can dynamically report four maximum UL duty cycles. The UE may report to the network, as the UE capability information, a maximum value or a minimum value of candidate values for the maximum UL duty cycles that can be reported dynamically. This UE capability information may be maxUplinkDutyCycle-FR2, or may be capability information that pertains to another maximum UL duty cycle.

FIG. 2B illustrates a relationship between DI field values and maximum UL duty cycles assumed by a UE that has reported that the maximum value for maximum UL duty cycle candidate values is n30. The highest bit (the first bit) may correspond to n30 reported, and the i-th bit (i = 2, 3, 4) may correspond to a candidate that is i-1 smaller than n30 (in other words, to n25, n20, and n15, respectively) in the candidates (for example, n15 through n100 in Rel. 15 NR FR2) for the maximum UL duty cycle stipulated in advance in a specification. The order of the association is not limited to this.

Note that the number of candidate values (four in FIG. 2B) for the maximum UL duty cycle that can be dynamically reported may be reported to the network by the UE as UE capability, or may be configured by the network to the UE by using higher layer signaling.

Note that the four bits in FIG. 2B may be interpreted as a bit string with the number of bits that can represent the number of candidate values for the above-mentioned maximum UL duty cycle that can be dynamically reported. For example, the values = {0001, 0010, 0100, 1000} in FIG. 2B may be interpreted as the values = {00, 01, 10, 11}. In this case it is possible to suitably reduce the number of bits for the DI field.

### [Priority Rule Pertaining to Maximum Uplink Duty Cycle]

When a plurality of CSI report timings overlap and a resource used in a CSI report cannot include a plurality of pieces of the CSI (for example, all of the CSI) that overlap, the UE may drop at least one CSI report in accordance with a priority rule.

The priority rule may be related to a priority value pertaining to a CSI report. For example, the priority value may be defined using a function Pri_{iCSI} (y, k, c, s) .

A case where the value of Pri_{iCSI} (y, k, c, s) of a first CSI report is less than the value of Pri_{iCSI} (y, k, c, s) of a second CSI report may mean that the first CSI report has a higher priority than the second CSI report.

For example, the priority value may be obtained with Pri_{iCSI} (y, k, c, s) = 2 · N_{cells} · Mₛ · y + N_{cells} · Ms · k + Ms · c + s. Note that the priority value may be obtained on the basis of a different definition.

Here, y may be a value based on at least one of the type of the CSI report (A-CSI report, SP-CSI report, or P-CSI report), whether the channel (PUSCH or PUCCH) for transmitting the CSI report and the CSI report pertains to the duty cycle, or the like. For example, it may be y = 0 in the case of a PUSCH-based A-CSI report, y = 1 in the case of a PUSCH-based SP-CSI report, y = 2 in the case of a PUCCH-based SP-CSI report, and y = 3 in the case of a PUCCH-based P-CSI report.

When the CSI report pertains to the duty cycle (for example, the CSI report includes L1-RSRP which indicates the duty cycle), y may equal one of 0, 1, 2, and 3 irrespective of the type of the CSI report, the channel, or the like.

k may be a value based on at least one of whether the CSI report includes L1-RSRP, whether the CSI report pertains to the duty cycle, or the like.

k may be, for example, stipulated in accordance with a specification, or may be configured (designated) in accordance with higher layer signaling, physical layer signaling, or a combination of these, so as to have at least one priority relationship from the following (A) through (C):
(A) a CSI report that includes L1-RSRP ≥ (or "=" or ">") a CSI report pertaining to a duty cycle > other CSI reports (CSI reports that include neither L1-RSRP nor a duty cycle);
(B) a CSI report pertaining to a duty cycle ≥ (or "=" or ">") a CSI report that includes L1-RSRP > other CSI reports (CSI reports that include neither L1-RSRP nor a duty cycle); and
(C) a CSI report that includes L1-RSRP > other CSI reports stipulated in Rel-15 NR (for example, a CSI report that includes RI, PMI, or the like) > a CSI report pertaining to a duty cycle > other CSI reports stipulated in Rel-16 NR and later versions.

For example, so that at least one priority relationship out of the above-mentioned (A) through (C) is satisfied, a value such as the following may be configured or stipulated for k:
(A) the k in a CSI report that includes L1-RSRP is k = 0,
   the k in a CSI report pertaining to a duty cycle is k = 0, and
   the k in a CSI report that includes neither L1-RSRP nor L1-SINR is k = 1;
(B) the k in a CSI report pertaining to a duty cycle is k = 0,
   the k in a CSI report that includes L1-RSRP is k = 1,
   the k in a CSI report that includes neither L1-RSRP nor a duty cycle is k = 2; and
(C) the k in a CSI report that includes L1-RSRP is k = 0,
   the k in a (Rel-15 NR) CSI report that includes neither L1-RSRP nor L1-SINR is k = 1, and
   the k in a CSI report pertaining to a duty cycle is k = 2.

Each value for k is merely an example, and there is no limitation to this. For example, k in the above-mentioned (B) CSI report pertaining to a duty cycle may be a negative value (k = -1), for example.

According to the above-mentioned (A), it is possible to report the duty cycle with the same degree of priority as that of a report for a beam relationship (L1-RSRP). It is also possible to report L1-RSRP, which is important in relation to performance, with the highest priority.

According to the above-mentioned (B), it is possible to report the duty cycle with the highest priority.

According to the above-mentioned (C), it is possible to prioritize reporting of CSI used in Rel-15 NR (L1-RSRP, and the like) ahead of CSI used in Rel-16 NR and later versions. The CSI used in Rel-15 NR is more important in relation to continuing basic communication.

The UE may be configured with CSI report configuration information (CSI-ReportConfig) which includes information pertaining to k. When k can be configured, it is possible to more flexibly control the priority relationship for the above-mentioned (A) through (C) for each CSI report.

c may be the serving cell index. s may be a configuration ID (reportConfigID).

N_{cells} may be a value for the maximum number of configured serving cells (higher layer parameter maxNrofServingCells). Mₛ may be a value for the maximum number of CSI report configurations that are configured (higher layer parameter maxNrofCSI-ReportConfigurations).

According to the first embodiment described above, the UE can report a value for the maximum uplink duty cycle at an appropriate timing, and suitable UL scheduling control is possible.

### <Second Embodiment>

In a second embodiment, a UE reports to a network values for more than one maximum uplink duty cycle as UE capability information, differing from Rel. 15 NR.

In a case of having reported a plurality of values for the maximum UL duty cycle as UE capability information and having transmitted to the network a specific signal (for example, a different signal or different information that is not UE capability information), it is assumed that UL scheduling is performed for the UE from the network on the basis of a smaller value of the plurality of values for the maximum UL duty cycle or a value indicated by this specific signal.

In other words, when this specific signal is transmitted to the network, the UE may apply P-MPR to reduce transmit power or may act in accordance with the already scheduled UL when a ratio of scheduled UL symbols within a given evaluation period (for example, 1 second) exceeds the smaller value of the plurality of values for the maximum UL duty cycle or the value indicated by the specific signal.

This specific signal may be referred to as an alert signal, an emergency signal, a proximity signal, or the like. This specific signal may be transmitted when the UE recognizes, on the basis of a measurement result from a sensor, the channel state, or the like, that the corresponding antenna of the UE and a human body are closer than a given threshold. This specific signal is represented as an "alert signal" below.

The alert signal may be a signal that corresponds to one bit of information, or may be a signal that corresponds to information pertaining to the maximum UL duty cycle. In the former case, the one bit of information may indicate "close/far", "danger/safety", "low maximum UL duty cycle/high maximum UL duty cycle", or the like.

When the UE has reported two values for the maximum UL duty cycle as UE capability information, the alert signal may be a signal indicating one bit of information. When the UE has reported three or more values for the maximum UL duty cycle as UE capability information, the alert signal may be a signal indicating two or more bits of information (or information pertaining to the maximum UL duty cycle).

The alert signal may correspond to at least one signal (or a field or the like included in this signal) from the above-mentioned (1-1) through (1-4) described in the first embodiment. For example, the alert signal may correspond to a signal resulting from interpreting the maximum UL duty cycle in the description of at least one signal out of the above-mentioned (1-1) through (1-4) as the above-mentioned one bit of information, or may correspond to the DI field (for example, the specific four bits included in the CSI report).

Note that information corresponding to the alert signal (for example, information included in the alert signal) may be referred to as alert information. The alert information may be represented by an alert indicator (AI), an emergency indicator (EI), or the like. The alert information may correspond to information resulting from coding together (joint coding) information pertaining to the maximum UL duty cycle, other information pertaining to the alert, and the like.

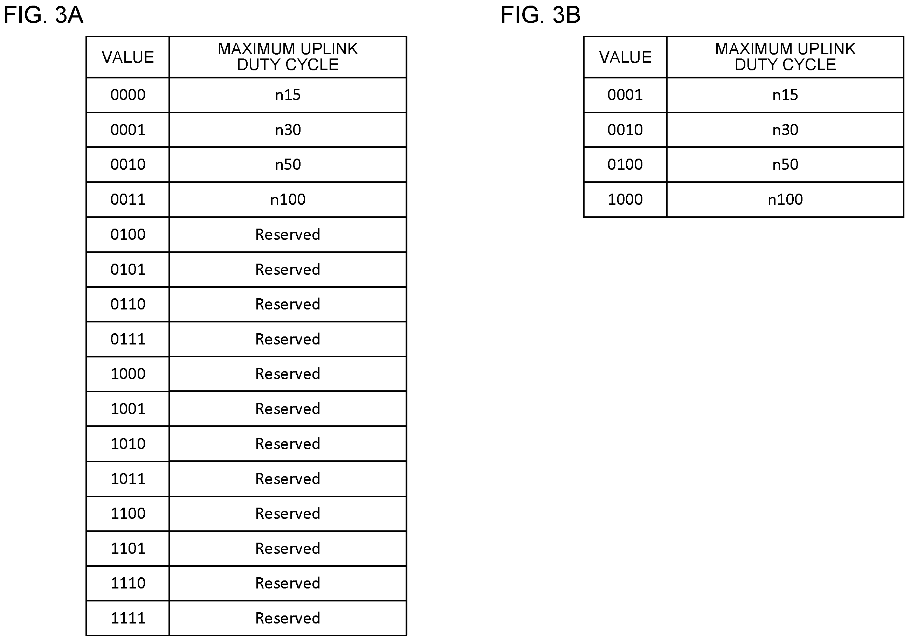

FIGS. 3A and 3B are diagrams to illustrate examples of correspondence between alert signal values and maximum UL duty cycles. The correspondence here may be stipulated in advance in a specification or may be configured by higher layer signaling or the like. All maximum UL duty cycles corresponding to the value of the alert signal (alert information) may be reported as the UE capability information. In other words, the UE in the present example has reported capability information for four maximum UL duty cycles, {n15, n30, n50, n100}, to the network.

FIG. 3A illustrates an example of the above-mentioned correspondence in the case where a value for the alert signal is indicated by four bits. In FIG. 3A, the alert signal values (code points) are associated with maximum UL duty cycles in ascending order, but there is no limitation to this order, and the alert signal values may be associated with maximum UL duty cycles in descending order, for example.

FIG. 3B illustrates an example of the above-mentioned correspondence in the case where the alert signal value is indicated by four bits, which is the same as in FIG. 3A. A difference from FIG. 3A is a bitmap base representation in which only one bit is '1'. The i-th bit (i = 1, 2, 3, 4) may correspond to the i-th largest (or smallest) candidate out of the reported maximum UL duty cycles. The order of the association is not limited to this.

Note that the number of candidate values (four in FIGS. 3A and 3B) for the maximum UL duty cycle that can be dynamically reported may correspond to the number of maximum UL duty cycles reported to the network by the UE as UE capability, or may be configured by the network to the UE using higher layer signaling.

Note that the four bits in FIG. 3B may be interpreted as a bit string with a number of bits that can represent the number of candidate values for the above-mentioned maximum UL duty cycle that can be dynamically reported. For example, the values = {0001, 0010, 0100, 1000} in FIG. 3B may be interpreted as the values = {00, 01, 10, 11}. In this case, the number of bits for the alert signal value can be suitable reduced.

Note that, when the alert signal (alert information) is included in a CSI report, a priority rule in which the "CSI report pertaining to a duty cycle" in the above description of priority rules pertaining to maximum uplink duty cycles is interpreted as "CSI report pertaining to an alert signal (alert information)" may be applied.

According to the second embodiment described above, when the UE has reported capability for a plurality of maximum uplink duty cycles, the UE can transmit an alert signal for switching at an appropriate timing, and suitable UL scheduling control is possible.

### <Additional Information>

In the present disclosure, the maximum UL duty cycle may be interchangeably interpreted as capability for the maximum UL duty cycle, "maxUplinkdutycycle", "maxUplinkdutycycle-FR2", a dynamic maximum UL duty cycle (or "dynamicMaxUplinkdutycycle"), dynamic maximum UL duty cycle in FR2 (or "dynamicMaxUplinkdutycycle-FR2"), or the like.

"maxUplinkDutyCycle-FR2" may also be interchangeably interpreted as "maximum UL duty cycle value corresponding to maxUplinkdutycycle-FR2".

In the first embodiment, when a given time period has elapsed since the UE transmitted to the network a value for the maximum uplink duty cycle that differs from a reported value for the maximum uplink duty cycle, the UE may return the maximum UL duty cycle to the reported maximum uplink duty cycle. The UE may judge whether the given time period has elapsed on the basis of a timer. This timer may be activated at the time of transmission of at least one signal out of the above-mentioned (1-1) through (1-4).

In the second embodiment, when a given time period has elapsed since the UE transmits an alert signal to the network, the UE may return the maximum UL duty cycle to one (for example, the larger one) of the reported maximum uplink duty cycles. The UE may judge whether the given time period has elapsed on the basis of a timer. This timer may be activated at the time of transmission of the alert signal.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

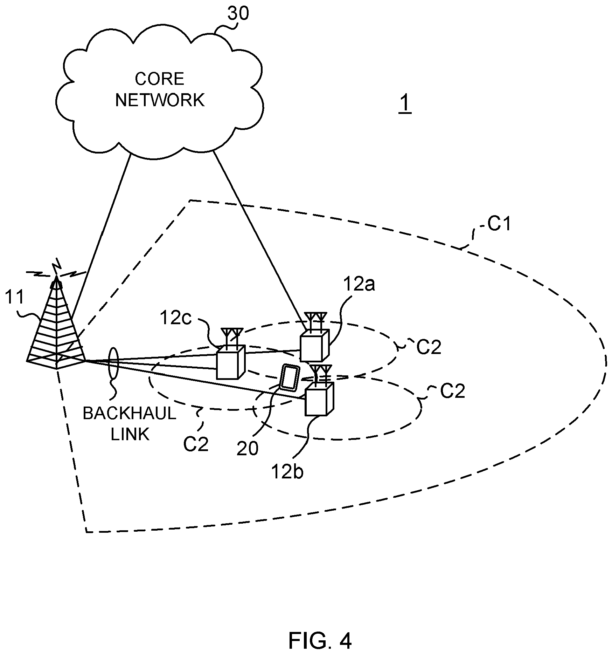

FIG. 4 is a diagram to illustrate an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect illustrated in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CC) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

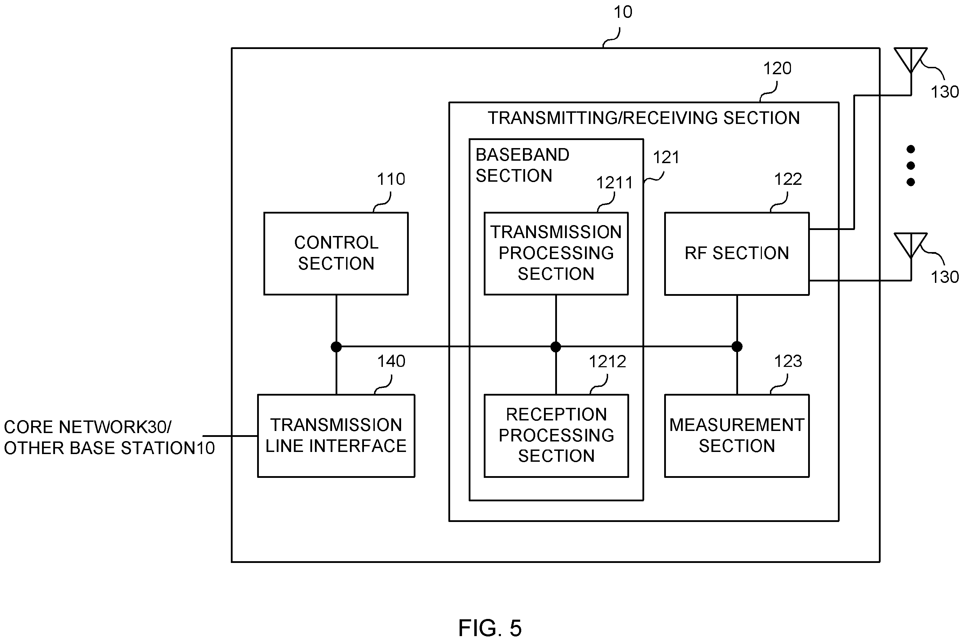

FIG. 5 is a diagram to illustrate an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily illustrates functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the control section 110 may, on the basis of capability information (for example, *maxUplinkDutyCycle-FR2*) that indicates one or more values for maximum uplink duty cycle notified from a user terminal 20, control UL scheduling with respect to the user terminal 20. The control section 110 may, on the basis of at least one of UCI, an alert signal, and the like notified from the user terminal 20, judge the maximum uplink duty cycle that the user terminal uses.

### (User Terminal)

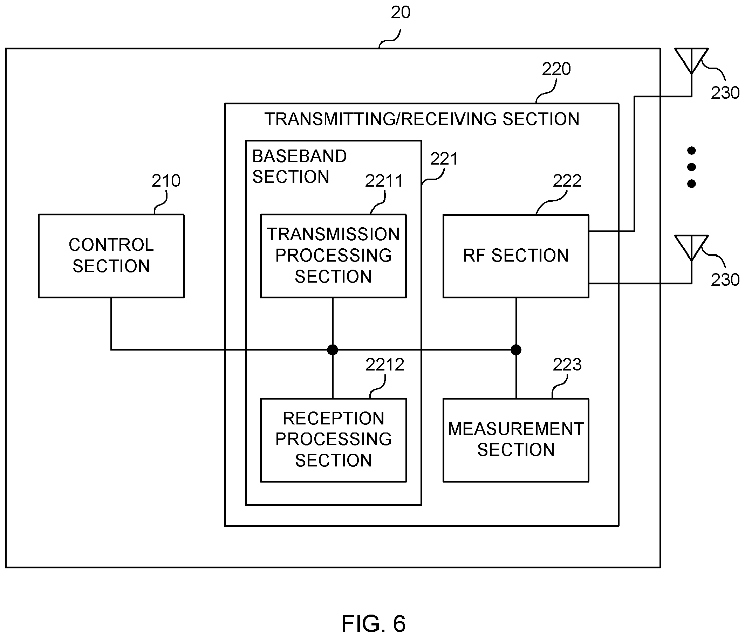

FIG. 6 is a diagram to illustrate an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily illustrates functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may transmit capability information (for example, *maxUplinkDutyCycle-FR2*) indicating one value for the maximum uplink duty cycle.

The control section 210 may use a signal or other information that differs from this capability information to perform control so as to transmit information pertaining to the maximum uplink duty cycle.

The control section 210 may use uplink control information (UCI) to perform control so as to transmit the information pertaining to the maximum uplink duty cycle.

The control section 210 may use one field for reference signal received power included in a channel state information (CSI) report to perform control so as to transmit the information pertaining to the maximum uplink duty cycle.

On the basis of a number of reference signal resources for a report target, the control section 210 may use any field for reference signal received power included in the CSI report to determine whether to transmit the information pertaining to the maximum uplink duty cycle.

The control section 210 may determine a priority value pertaining to a channel state information (CSI) report on the basis of whether the CSI report pertains to the maximum uplink duty cycle.

The transmitting/receiving section 220 may transmit capability information (for example, *maxUplinkDutyCycle-FR2*) indicating more than one values for the maximum uplink duty cycle. This capability information may be one item of capability information that indicates a plurality of values, or may be a plurality of items of capability information.

In a case of transmitting a signal (for example, an alert signal) or information that differs from the capability information, the control section 210 may control the maximum uplink duty cycle that is to be used. For example, the control section 210 may determine one value out of the reported more than one values as the maximum uplink duty cycle to use.

When transmitting an alert signal, the control section 210 may perform control so as to use the maximum uplink duty cycle that corresponds to the smaller value out of the more than one values.

When transmitting an alert signal, the control section 210 may perform control so as to use the maximum uplink duty cycle that corresponds to a value indicated by this alert signal.

The value indicated by the alert signal may correspond to one field for reference signal received power included in a channel state information (CSI) report.

The control section 210 may determine a priority value pertaining to a channel state information (CSI) report on the basis of whether the CSI report pertains to the maximum uplink duty cycle.

### (Hardware Structure)

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

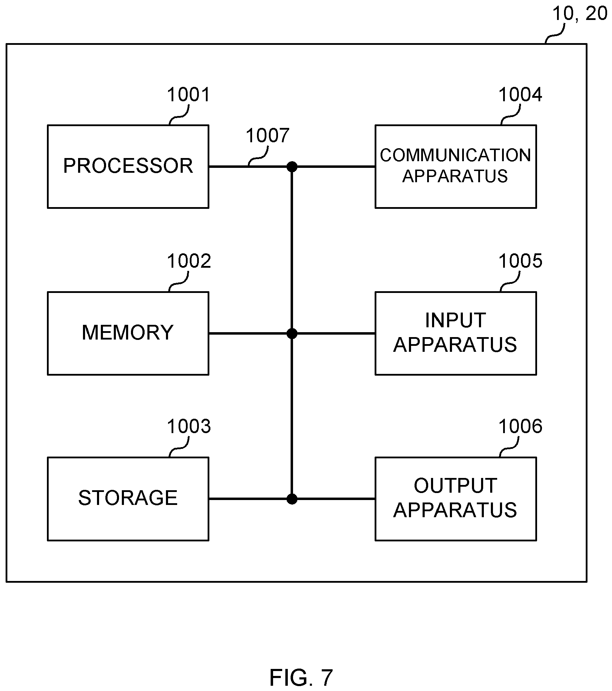

For example, a base station, a user terminal, and so on according to one embodiment of the present disclosure may function as a computer that executes the processes of the radio communication method of the present disclosure. FIG. 7 is a diagram to illustrate an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses illustrated in the drawings, or may be configured not to include part of apparatuses.

For example, although only one processor 1001 is illustrated, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings.

For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power) .

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a transmitting section that transmits capability information indicating more than one values for a maximum uplink duty cycle; and
a control section that controls the maximum uplink duty cycle to use when transmitting a signal or information different from the capability information.

2. The terminal according to claim 1, wherein
in a case of transmitting an alert signal, the control section performs control to use the maximum uplink duty cycle that corresponds to a smaller value out of the more than one values.

3. The terminal according to claim 1, wherein
in a case of transmitting an alert signal, the control section performs control to use the maximum uplink duty cycle that corresponds to a value indicated by the alert signal.

4. The terminal according to claim 3, wherein
the value indicated by the alert signal corresponds to one field for reference signal received power included in a channel state information (CSI) report.

5. The terminal according to any one of claims 3 or 4, wherein
the control section determines a value for priority pertaining to a channel state information (CSI) report on the basis of whether the CSI report pertains to the maximum uplink duty cycle.

6. A radio communication method for a terminal, the radio communication method comprising:
a step for transmitting capability information indicating more than one values for a maximum uplink duty cycle; and
a step for controlling the maximum uplink duty cycle to use when transmitting a signal or information different from the capability information.
